# EUROPEAN PATENT SPECIFICATION

(11) **EP 0 782 475 B1**
(45) Date of publication and mention of the grant of the patent: **06.05.1998**
(21) Application number: 95928049.6
(22) Date of filing: 17.08.1995
(51) Int. Cl.: B01J 13/18

(54) **PROCESS FOR PREPARING CARRIERS SATURATED OR COATED WITH MICROENCAPSULATED SCENTS**
VERFAHREN ZUR HERSTELLUNG VON MIT DUFTSTOFFEN GESÄTTIGTEN ODER BESCHICHTETEN MIKROVERKAPSELTEN TRÄGERN
PROCEDE DE PREPARATION DE SUPPORTS SATURES OU ENROBES DE PARFUMS MICROENCAPSULES

(30) Priority: 19.09.1994 SI 9400362
(43) Date of publication of application: 09.07.1997
(73) Proprietor: AERO, KEMICNA, GRAFICNA IN PAPIRNA INDUSTRIJA, D.O.O., 3000 Celje (SI)
(72) Inventor: KUKOVIC , Milena, 3000 Celje (SI); KNEZ, Emil, 3000 Celje (SI)
(74) Representative: Schwarzensteiner, Marie-Luise
(86) International application number: SI9500019
(87) International publication number: WO9609114

(56) References cited:
- EP-A- 0 283 711
- EP-A- 0 385 535
- WO-A-90/10436
- US-A- 5 051 305
- YU-A- 18 623

## Description

The invention refers to a coating or an impregnation process of a support or a carrier with microencapsulated scents which comprises the step of preparing the microcapsules from scents containing water-soluble compounds.

The technical problem is to improve the in situ polymerization process when essential oils which contain water-soluble compounds are encapsulated.

Accordingly, a process for preparing of carriers, either saturated or coated with microencapsulated scents, shall be obtained, by means of which it shall be possible to manufacture such carriers - either saturated or coated with microencapsulated scents - that evaporation of scent and influence of the environment to the scent or to its sensitive components will be excluded and thus also using of environmental unfriendly, impermeable packaging for such carriers would no more be neccesary. At the same time, and instead of unwilling permanent and therefore short effect of scents, the willing and thus long-lasting effect of scents will be ensured, by which durability of the carriers obtained by this process will be essential prolonged.

Carriers saturated with free scents (e.g. essential oils) are common used. Refreshing tissues, deodorizing or antiseptic shoe insoles, deodorizing towels, paper sheets for promotion and advertising of scents and similar products are known. Such articles are usually made by using appropriate process comprising saturation or impregnation of a carrier with scents. As the scents are volatile it is necessary to pack articles produced by such process into special impermeable packaging which is not environment-friendly. In spite of impermeable packaging the problems emerge later when the packaging is opened. The problem is not so evident with articles that are intended for instant for short-time use as it is with durable products, i.e. deodorizing shoe insoles where durability of a product weakens quickly due to the volatile character of scents. In addition to the above mentioned problem of packaging and durability with the products obtained according to previously mentioned method of saturation with scents there are also certain serious and quite practical troubles, such as e.g product dampness by touching thereof uncontrolled release of the essence as well as exposure of scents to the negative influences of the environment, especially to light, temperature and air.

In the past there were some experiments focused to avoiding the previously mentioned troubles. One of them e.g. resulted a process where a scent has been bound to certain adsorbents in order to drop intensivity of the scent release. However, the scent remained completely unprotected against the environmental effects.

Furthermore, several processes of microencapsulation are known, according to which relatively slow releasing of a scent or a scent composition and at the same time also certain protection against negative influences of the environment has been achieved.

The process of microencapsulation in generally comprises coating of emulgated particles (i.e. solvents or leuco dyes) and thus preparation of microcapsules of various characteristics. Microcapsules produced in such a manner can be applied in various fields and for different purposes, e.g. by manufacturing of carbonless copy papers (US 2,730,456; US 4,100,103; US 4,743,579; EP 107.957), by preparation of microencapsulated pesticides with controlled release in agricultural applications (GB 1,581,255; EP 17.409; YU 3109; EP 51.161), by separation of reactants (DE 2.247.468; US 4,536,524) of double-component glues, in mariculture (GB 2,040,863) by preparation of food for larvae as well as in medicine by masking a taste of certain medicaments and/or by controlling release thereof (US 3,860,733).

Generally, microencapsulation can be performed either by mechanical or chemical processes, whereby chemical processes have some benefits as they enable also changing of wall characteristics. In common, chemical processes of microencapsulation can be classified in three main groups, namely coacervation, interfacial polycondensation or polymerization as well as in situ polymerization or polycondensation.

By the coacervation processes (e.g. US 2,800,457; US 2,730,456; GB 2.099.877; EP 58.430; GB 2.122.634; DE 3.424.115, DE 2.100.700 and FR 2.570.604) gelatine in combination with gum arabic or some other anion polymers such as carboxymethylcellulose, polyacrylic acid, maleic anhydride copolymer or similar substances are most frequently used as a wall material.

The main deficiency of such processes is that gelatine is a natural substance, therefore the input material characteristics can vary and farther coacervation can be performed only at a low concentration of aqueus solutions. Such processes ordinary take a lot of time and are moreover conditioned by relatively high technical demands. Moreover, walls of microcapsules obtained by such processes still have bad mechanical properties, unless they are additionally treated.

There were also some other ideas described (e.g. according to EP-A-0-385 535) offering however unfortunately any useful solution concerning the problem discussed with regard to the present invention.

When microencapsulating by interfacial polymerization (e.g. EP 107.957, US 4,324,817, EP 16.378, DE 3.421.865, GB 1.581.255, US 4.228.216, DE 3.635.821, US 3,429,827, US 4,000,087 and US 4,785,048) the wall forming reactants are present both in the oil (hydrophobic) phase as well as in the water or in common aqueous (hydrophilic) phase.

The wall of microcapsules is formed on the border between the oil phase and aqueous phase. Therefore, the wall thickness by all microcapsules is to be proportional with the microcapsule size. Namely, in common all the microcapsules obtained by the process of coacervation or in situ polycondensation have the walls of the same, uniform thickness. This circumstance represents without any doubt certain advantage. However, it is difficult or sometimes quite impossible to prepare microcapsules, which would have such walls, by which at the same time also mechanical properties would be acceptable. Namely, upon initiation forming the wall, the contact between the reactants (whereby e.g. the reacting pairs of polyol/isocyanate, polyamine/isocyanate and polyhydroxy/epoxy compound can be used) is hindered, so that farther reaction process depends mainly on the possibility of diffusion through the wall already formed.

The consequence of the above described features are unavoidable deficiencies of such methods represented mainly through the reactiveness of reactants, incomplete reactions, and moreover even a possibility of reaction with one of the core components. Of that reason, many substances cannot be microencapsulated by means of such process at all.

When microencapsulating according to the process of in situ polymerization or in situ polycondensation of e.g. amino-formaldehyde resins (e.g. US 4,001,140; US 4,100,103; CA 1,108,944; US 4,675,249; EP 82.635; EP 133.295; EP 237.054; DE 3.624.187; DE 3.532.878; JP 137.852; DE 3.709.586; YU 18623-P-1319/84) all neccesary substance foreseen to forming walls is obtained merely from the aqueous (continous) phase. If the conditions during the process would be ideal, all the wall substance which should be precipitated during such a process, for example by changing pH or temperature, would be uniformly distributed over the complete microcapsule surface, whereby all the walls should have the same thickness, regardless the size of microcapsules. As the wall material, amino-formaldehyde resins (melamine-formaldehyde and urea-formaldehyde or their mixtures) were mainly used. Realization of some methods either known earlier (e.g. according to GB 1,301,052; or GB 1,156,725) or described in the last time (e.g. DE 3.709.586 or US 4,333,849) was relativelly difficult. Thus, there were some amendments, especially in the phase of forming of the wall or stabilization thereof. One of the mentioned processes is thereby characterized by the presence of appropriate modifiers serving primarily as an emulsifier, furthermore by initiating polycondensation of amino-component and aldehyde component or amino-formaldehyde precondensate in a specific way (so that polymerization develops only on the surface of emulsified oil drops and not throughout the whole water phase), and finally by using thereof as a binder to the base when polymerization is finished. Moreover, presence of modifiers results in more simple controlling the process as well as in good mechanical properties of microcapsules obtained.

Furthermore, in the WO-A-90 10 436 a membrane encapsulated essential oil, a process of preparing the perfuming agent and the use of the perfuming agent to scent a substrate have been described. Appropriate perfuming agent contains one or more of an essential oil capsule having a core of essential oil encapsulated within a membrane, the essential oil capsule being dispersed in an aqueous solution containing a surfactant. The problem concerning the water-soluble compounds remains thereby completely out of discussion.

Regarding to coacervation methods or e.g. methods of interfacial polymerization, performing or realization the process of in situ polymerization is especially with regard to technology less complicated; in addition, such a process enables forming of microcapsules having better mechanical properties (resistance to breakage) and the microcapsule emulsion comprising high percentage of dry substance at appropriate low viscosity.

Microencapsulation of scents, especially essential oils, can be also performed by the so called in situ microencapsulation. But in common, water-soluble or aqueous components of scents (with functional groups - OH, -NH, -C=O, -CHO or COOH) even in very small quantities involve great problems during microencapsulation. On the one hand during emulsifying they enter into aqueous phase and involve herewith local precipitation of emulsifier, whereby change of particle size due to reduced emulsifying capacity appears, which is even intensified during the heating to the polymerization temperature. Namely, the solubility of acids at raised temperature is even higher, so that accumulation of polymerized resin on the surface of oil particles is even more difficult. On the other hand, an uncontrolled polymerization of amino-aldehyde resin in the mass can occur, or even a reaction with the amino-aldehyde resin; whereby appropriate physical (especially mechanical) properties of the wall, e.g. resistance to breakage, are also changed.

In situ microencapsulation was described e.g. in the YU-A-18 623 (corresp. to SI-A-8411319) relating to process for preparing of microcapsules used by carbonless copying papers or pressure-sensitive copying papers. By this process, the core forming materials are leuco dyes, which are solved in appriopriate solvents, which are however non-aqueous or not soluble in the water. The process as described in the YU-A-18 623 as such therefore does not enable avoiding the problem exposed by the present invention.

Avoiding the problem exposed at the beginning is possible by elimination of free acids and water-soluble components from the scent composition before microencapsulation. This is achieved by preferably multiple water extraction involving thereby a consequence that free acids and water soluble components are to be distributed in hydrophobic and hydrophilic phase.

Namely, according to the invention, the process or method for preparation of carriers, saturated or coated with microencapsulated scents, has been essentially amended in such a manner, that during the preparation of the microcapsule emulsion, when preparing a core material, water for the extraction of water soluble or aqueous components is emulsified in a solution of essential oils or scents and separated therefrom after extraction. When performing such a step, the essential oils or scents, especially natural essential oils or synthetic scents or their mixtures, furthermore either pure scents or scents diluted with adequate solvents (e.g. phtalates, myristates, adipates or higher nonaromatic hydrocarbons) can also be microencapsulated.

Accordingly, the process comprises the following main steps:
- prior to microencapsulation, during preparation of microcapsule emulsion, namely during appropriate core material preparation, the water is emulsified into solution of essential oils or scents; once the water-soluble compounds have been extracted from the essential oil or scent, the water which is loaded with the extracted compounds is splitted asside; as well as
- microencapsulation started by appropriate initiation of wall formation by increasing temperature and/or by change of pH and finished or interrupted by change of the pH and thus stopping the polymerization, whereafter preparation of coating and appropriate coating or impregnation of carrier is performed.

Thereby, the water-soluble components are extracted from the solution of essential oils in solvents by means of water.

When initiating the microcapsule wall the temperature is gradually increased from the value of which corresponds to approximately 50% value of the volatility temperature of each essential oil or scent up to the temperature of which value corresponds to approximately 90% value of the volatility temperature of each essential oil or scent. At this temperature, emulsion is kept for 1 - 2 hours.

When preparing the coating or impregnating mixture the microencapsulated scent(s), binders, organic and/or inorganic pigment sand fillers, anti-foaming agents and mediums for viscosity regulation are added, depending on the carrier.

When coating the carrier, the coating in a form of suspension is applied either by scraper, air knife or cylinders; when impregnating woven or non-woven textile, paper cardboard or foil made of artificial material, which is transported through appropriate impregnation basin containing impregnating mixture.

The possibilities of microencapsulation of scents based on modified or improved process according to the invention are regarding to methods already known represented by several examples being briefly explained in further description.

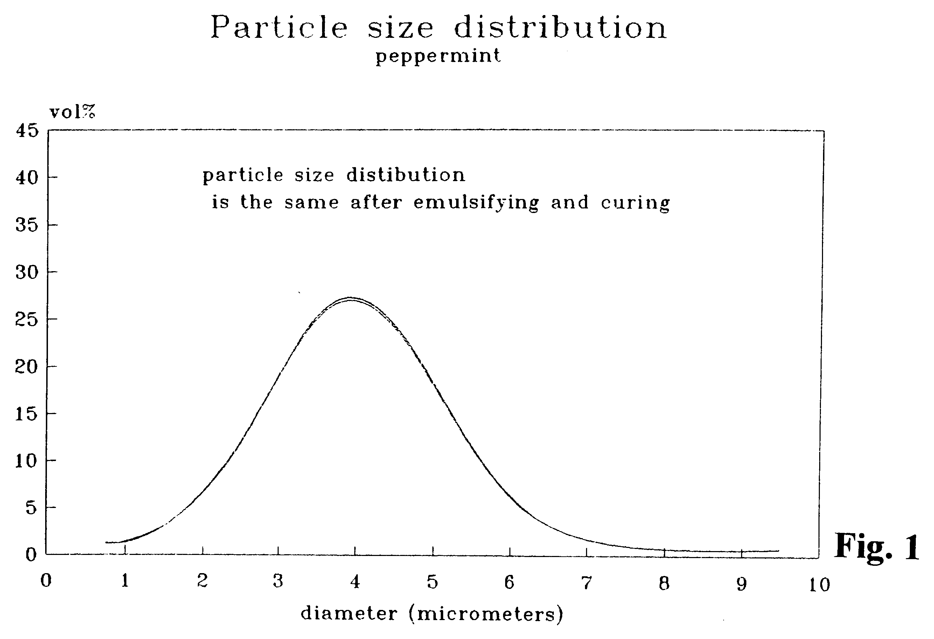

Distributions with respect to particles size after emulsifying and curing are shown in Fig. 1 to 6. The size of microcapsules has been measured by the Coulter Counter TA II after the phase of emulsifying and after curing phase. Before and after curing the emulsion has been observed with an optical microscope in order to control the presence of possible microcapsule agglomerates. Microcapsule curing has been evaluated by means of auxiliary microencapsulation where 3% leuco dye crystalviolet lacton (CVL) have been added to the microcapsule core, containing a scent, and thereafter microencapsulated according to the same process as the scent itself.

Curing and consequently the diffusion and mechanical properties of microcapsules can be evaluated by curing test (according to method 1), and by smudge test (according to method 2). Viscosity of the microcapsule emulsion containing in addition to scents also microencapsulated leuco dye may be appropriatelly adapted (100 to 150 mPa s) thanks to dilution with water. Such an emulsion can be applied to paper (50 g/m²) by means of a wire scraper. Applied coating can be dried (e.g. by an ordinary hair drier) up to the value of 5 g/m², by which the so called CB-sheet is obtained.

After performing the curing test acc. to method 1, the CB-sheet, or its coated side, is coated with silica so! solution (Kisselsol 300 F, Bayer) and dried with a hair drier. During drying the acid crystalizes and damages the microcapsule wall. Namely, when acting also as a developing means for leuco dye, reaction with such an acid results in a colour which can be measured by densitometer (measuring of optical density).

Sometimes it is even possible to make a comparison according to colour development between two kinds of microcapsules just by simple observing samples wothout any additional requisite. The intensity of colour image is in reciprocal relationship with the microcapsule wall strength but experiences show that microcapsules which develop more intensive colour image possess also higher diffusion.

When performing the smudge test in accordance to the method 2, it is possible to define the mechanical resistance of microcapsules, especially shearing strenght thereof, which is especially important by manipulation with coated carriers. Thereby, a CB-sheet (size e.g. corresponding to standard A4) is placed on a smooth surface or table with coated side upwards. Thereafter, appropriate CF-sheet, (sheet with a colour developer) is placed thereon, so that both coated sides stay in contact each to another. Thereafter, the CF-sheet is loaded with a weight of 0,5 kg, the diameter of which is 45 mm. The CF-sheet together with a weight is then moved on the surface of the CB sheet in the length of 200 mm. On the basis of colour intensity on the CF sheet it is possible to determine the mechanical resistance of the microcapsule walls. Rigidness or mechanical resistance of a wall is - as already mentioned - in reciprocal relationship with the colour intensity.

In the first example of process performing according to the invention peppermint essential oil was microencapsulated; 50 g of essential oil was dissolved in 150 g of i-propyl myristate. With help of dissolver mixer at 800-2000 rpm 20 g (in common, 15-25 g would be possible) of deionized water has been emulsified in this mixture. After 15 min. of mixing the emulsion has been poured into separator. After waiting on separation of the emulsion, the water has been split aside. Thereafter, the oil prepared in such a manner has been emulsified again by means of the dissolver mixer at 800-2000 rpm into 300 g of 5% solution of styrene maleinanhydride and 80 g of methylated melamin-formaldehyde precondensate having a pH value between 4.5 and 5.5 (preferably 5.5) and viscosity between 100 and 500 m Pa s (most preferred 200 Pa s). Duration of emulsifiying has been about 15 minutes at an ordinary room temperature, (generally, it takes as long as the desired particles size i.e. between 3 and 10 micrometers is obtained). Thereupon, emulsion was heated to 60-75°C (preferably 70°C) and kept at this temperature for 1 to 2 hours while continuously stirring.

Furthermore, the impermeability of microcapsules has been controlled. Thereafter, emulsion has been coled and the curing reaction has been interrupted/stopped by adding 5 g of 20% NaOH. Herewith the pH has been changed. The formaldehyde released through the reaction was eliminated by adding 10 g of 20% sodium bisulphite.

In the comparative example one of the processes known from the prior art has been applied, without any essential changes and in such a manner that only instead of leuco dyes as foreseen in the ordinary mode of the known prosess the essential oil of peppermint has been microencapsulated. In order to enable appropriate distinction with regard to previously described characteristics, the phase of treatment with water in this process has been omitted. Microcapsules obtained with means of such a method resulted essentially more irregular distribution of particles regarding the size thereof. Moreover, mechanical properties thereof have been essentially worse than those obtained by the process according to the invention.

In the second example of process performing according to the invention a mixture of essential oil of peppermint and citrus was used instead of the peppermint essential oil. The process characteristics and quantities corresponded to those quoted in relation with the first example of process performing according to the invention.

In the third example of process performing according to the invention a mixture of eucalyptus and peppermint essential oils was used instead of the peppermint essential oil. The process characteristics and quantities corresponding to those quoted in relation with the first example of the process performing according to the invention.

In the second and third example the process was the same as in the first example only that in the second comparative example a mixture of citrus and peppermint essential oil was used instead of peppermint essential oil and in the third example a mixture of eucalyptus and peppermint essential oils was used.

Moreover, microcapsules which in addition to previously mentioned scents contained 3% of leuco dye (CVL) as well, were also prepared.

In the Fig. 1 - 6 distribution of particles with respect to size after emulsifying and after curing is represented, while mechanical properties of microcapsules measured according to the above described method 1 or method 2 (microcapsules containing 3% leuco dye "CVL") are shown in the Table 1 as follows.

In the Fig. 1 distribution of particles with respect to size thereof is shown being a result of the first example of process according to the invention, whereby the peppermint oil has been used as a scent.

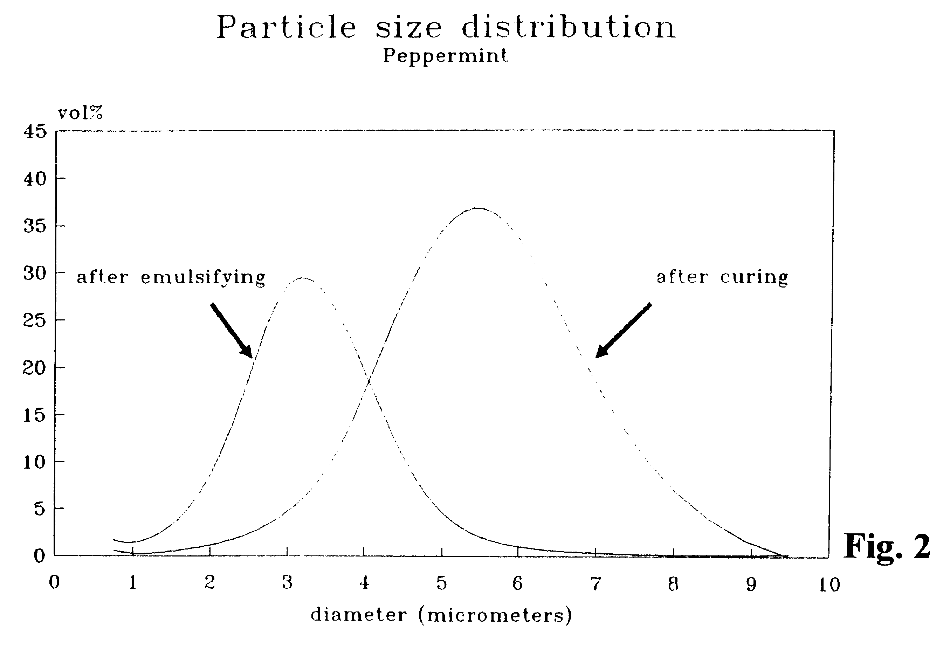

To enable comparison, in the Fig. 2 there is shown a result of an already known process, namely distribution of particles with respect to size thereof, whereby also the peppermint oil has been used as a scent.

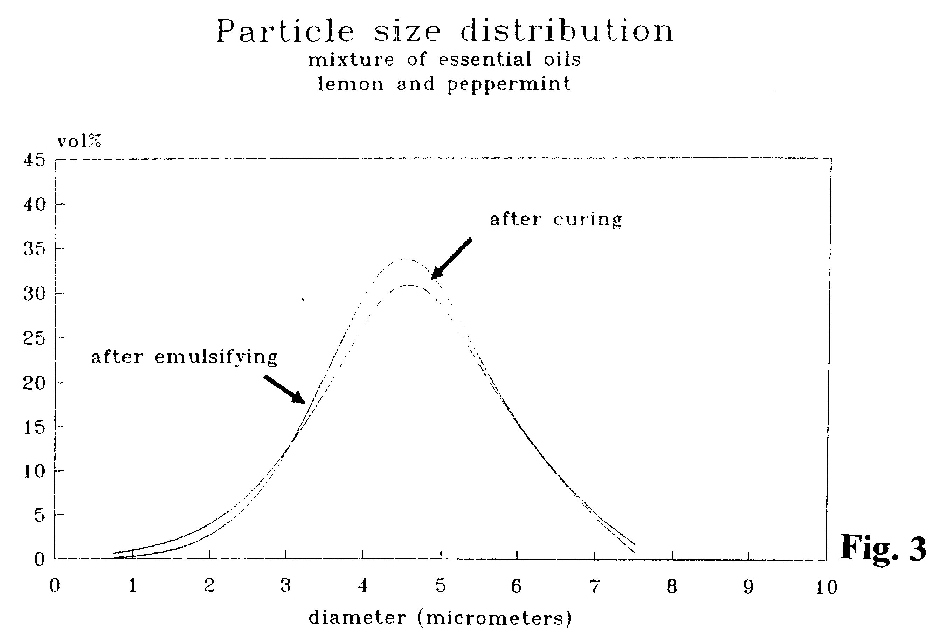

As a result of the second example of process performed according to the invention, in the Fig. 3 there is shown distribution of particles with respect to size thereof. Thereby, a mixture of essential oils of peppermint and citrus has been used as a scent.

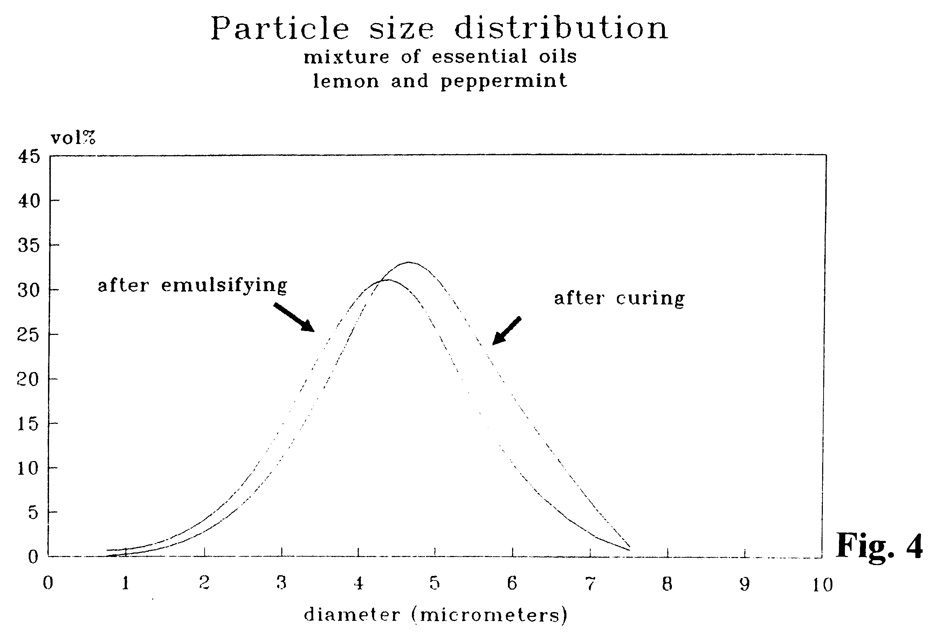

Again, to enable comparison, in the Fig. 4 there is shown distribution of particles obtained by a known process with respect to size thereof, whereby a mixture of essential oils, as with the previous process resulting distribution according to Fig. 3, has been applied.

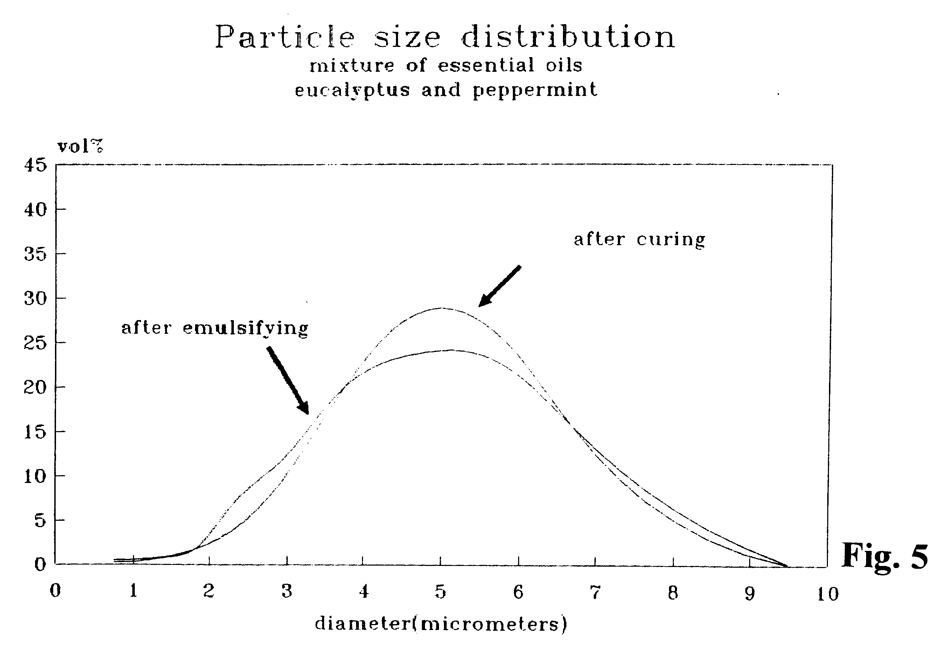

As a result of the third example of the process according to the invention, in the Fig. 5 there is shown appropriate distribution of particles with respect to size thereof. By this example, a mixture of eucalyptus and peppermint essential oil has been used.

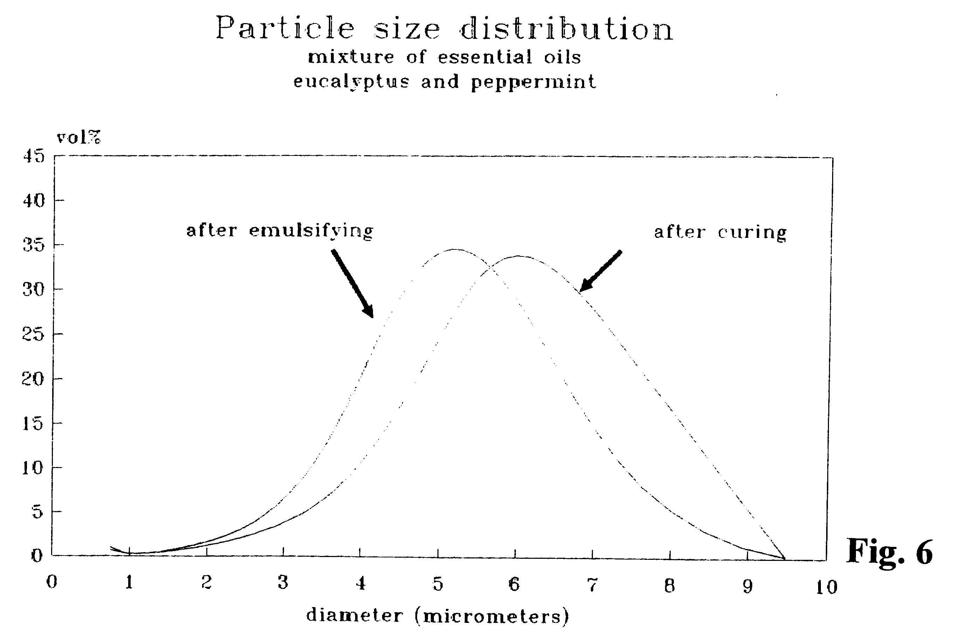

Again, in order to enable comparison, in the Fig. 6 there is shown a distribution of particles obtained by the known process, with respect to size thereof. By this example the same mixture of essential oils has been used as in example described in connection with Fig. 5.

Therefore, in the Fig. 1 - 6 appropriate distribution of particles size after emulsifying and curing is shown, while mechanical properties of microcapsules, measured by previously described method 1 or method 2 (microcapsules containing 3% leuco dye CVL) are shown in the Table 1.

**(Table 1)**

| Example | Curing Test | Smudge Test |
|---|---|---|
| Example 1 | good curing | poor smudge |
| Comparison example 1 | medium good curing | strong smudge |
| Example 2 | good curing | poor smudge |
| Comparison example 2 | poor curing | very strong smudge |
| Example 3 | good curing | poor smudge |
| Comparison example 3 | poor curing | very strong smudge |

When using such a process for preparation of carriers, either by saturating or by coating with microencapsulated scents, it is possible to obtain carriers, saturated or coated with microencapsulated scents where volatility of scent is prevented and the impact of environment to each scent used or to sensitive components thereof is eliminated. With carriers thus obtained the need for impermeable, environmental unfriendly packaging is no longer required. As the scent release starts willingly, for instance during the application, when microcapsule walls are damaged due to corresponding pressure, instead of unwilling permanent and therefore short-lasting effect of the scents as before, now willing and therefore long-lasting release is possible. Thus, by such carriers the period of use is prolonged, as - among others - the microcapsule wall protects the scent against diffusion. Accordingly, very small quantities of scents are released by diffusion. Furthermore, the carriers thus obtained can be additionally treated in an appropriate manner, e.g. printed in the printing machine without losing scent.

## Claims

1. Process for preparing carriers, saturated or coated with microencapsulated scents, comprising at least preparation of microcapsule emulsion, preparation of coating, and coating or impregnation of carrier e.g. by means of scraper, air knife or cylinders and using thereby woven or non-woven textile, paper or foil or appropriate artificial material as a carrier being transferred thereby through appriopriate impregnation basin, whereby preparation of said microcapsule emulsion comprises, in addition to the preparation of emulsion, also emulsifying of core material into a solution of wall material base containing modifier, as well as the initiation of wall formation by increasing temperature and/or by change of pH value and also finishing or interruption of the microencapsulation reaction by change of pH value and thus stopping polymerization, characterized in that prior to microencapsulation, namely during preparation of microcapsule emulsion, water is emulsified into solution of essential oils, and that once the water-soluble compounds have been extracted from the essential oil, the water which is loaded with the extracted compounds is splitted asside, whereby during microencapsulation appropriate initiation of forming the microcapsule wall is achieved by changing the pH and/or gradually increasing temperature from temperature the value of which corresponds to approximately 50% value of the volatility temperature of each essential oil or scent up to the temperature of which value corresponds to approximately 90% value of the volatility temperature of each essential oil or scent, whereafter emulsion is kept for 1 - 2 hours at this temperature.

2. Process as claimed in Claim 1, characterized in that essential oils used or scents used are especially natural essential oil and/or synthetic scents or mixtures thereof.

3. Process as claimed in Claims 1 and/or 2, characterized in that microencapsulated scents are either pure or diluted with adequate solvents such as phtalates, myristates, adipates, higher nonaromatic hydrocarbons.

4. Process as claimed in Claims 1 to 3, characterized in that during preparation of coating or saturation mixture with respect to the carrier used also appropriate microencapsulated scent(s), hinders, organic and/or organic pigments and filers, antifoaming agents and viscosity regulating mediums are added.

5. Process as claimed in Claims 1 - 4, characterized in that after extraction the water loaded with the extracted components is removed either by means of gravitation in the separators or by means of centrifuge.

## Patentansprüche

1. Verfahren zur Herstellung von mit mikroverkapselten Duftstoffen gesättigten oder beschichteten Trägern, das Wenigstens eine Herstellung einer Mikrokapsel-Emulsion, eine Herstellung eines Überzugs und eine Beschichtung oder Imprägnierung des Trägers, beispielsweise mittels eines Abschabers, Luftmessers oder Zylinders umfaßt, und dabei gewebte oder nicht gewebte Textilien, Papier oder eine Folie oder ein geeignetes künstliches Material als Träger verwendet werden, der dabei in ein geeignetes Imprägnierbad verbracht wird, wobei die Herstellung der Mikrokapsel-Emulsion zusätzlich zur Herstellung der Emulsion auch die Emulgierung eines Kernmateriales in eine Lösung aus Wand-Materialbasis, welche einen Modifikator umfaßt, sowie die Initiierung der Wand-Bildung durch Erhöhen der Temperatur und/oder durch Änderung des pH-Wertes und auch das Beenden oder Unterbrechen der Mikroverkapselungsreaktion durch Änderung des pH-Wertes und damit das Stoppen der Polymerisation umfaßt, dadurch gekennzeichnet, daß vor der Mikroverkapselung, nämlich während der Herstellung der Mikrokapsel-Emulsion, Wasser in die Lösung aus ätherischen Ölen emulgiert wird und daß sobald die wasserlöslichen Komponenten aus dem ätherischen Öl extrahiert worden sind, das Wasser, das mit den extrahierten Komponenten beladen ist, abgetrennt wird, wodurch während der Mikroverkapselung eine geeignete Initiierung der Bildung der Mikrokapsel-Wand durch Änderung des pH-Wertes und/oder durch schrittweises Erhöhen der Temperatur von der Temperatur des Wertes, welcher etwa dem 50%igen Wert der Flüchtigkeitstemperatur jedes ätherischen Öles oder Duftstoffes entspricht, bis zur Temperatur des Wertes, welcher etwa dem 90%igen Wert der Flüchtigkeitstemperatur des ätherischen Öles oder Duftstoffes entspricht, erreicht wird, wonach der Emulgiervorgang 1 bis 2 Stunden bei dieser Temperatur gehalten wird.

2. Verfahren nach Anspruch 1, dadurch gekennzeichnet, daß die verwendeten ätherischen Öle oder Duftstoffe insbesondere natürliche ätherische Öle und/oder synthetische Duftstoffe oder Mischungen davon sind.

3. Verfahren nach Anspruch 1 und/oder 2, dadurch gekennzeichnet, daß die mikroverkapselten Duftstoffe entweder rein oder verdünnt mit geeigneten Lösungsmitteln, wie Phthalaten, Myristaten, Adipaten, höheren, nichtaromatischen Kohlenwasserstoffen, sind.

4. Verfahren nach einem der Ansprüche 1 bis 3, dadurch gekennzeichnet, daß während der Herstellung der Überzugs- oder Sättigungsmischung hinsichtlich des verwendeten Trägers auch geeignete mikroverkapelte Duftstoffe, Bindemittel, organische und/oder anorganische Pigmente und Füllstoffe, Antischaummittel und die Viskosität regulierende Mittel zugegeben werden.

5. Verfahren nach einem der Ansprüche 1 bis 4, dadurch gekennzeichnet, daß nach der Extraktion, das Wassers, das mit den extrahierten Komponenten beladen ist, entweder durch Gravitation im Separator oder mittels einer Zentrifuge entfernt wird.

## Revendications

1. Procédé de préparation de supports saturés ou revêtus de parfums microencapsulés, comprenant au moins la préparation d'une émulsion de microcapsules, la préparation d'un revêtement et l'enduction ou l'imprégnation d'un support, par exemple au moyen d'un racloir, d'une lame d'air ou de cylindres, et l'utilisation de cette façon de textile tissé ou non tissé, de papier ou de feuille ou de matériau artificiel approprié en tant que support, lequel est à cet effet transféré à travers une cuve d'imprégnation appropriée, de telle sorte que la préparation de cette émulsion de microcapsules comprend aussi, en plus de la préparation de l'émulsion, l'émulsification d'un matériau de noyau dans une solution de base de matériau de paroi contenant un agent de modification, ainsi que l'initiation de la formation de paroi par augmentation de la température et/ou par changement de la valeur du pH et aussi la terminaison ou l'interruption de la réaction de microencapsulation par changement de la valeur du pH arrêtant ainsi de la polymérisation, caractérisé en ce qu'avant la microencapsulation, à savoir pendant la préparation d'une émulsion de microcapsules, de l'eau est émulsifiée dans une solution d'huiles essentielles, et qu'une fois que les composés solubles dans l'eau ont été extraits de l'huile essentielle, l'eau qui est chargée des composés extraits est séparée, de telle sorte que pendant la microencapsulation, une initiation appropriée de la formation de paroi des microcapsules est réalisée par changement du pH et/ou par augmentation graduelle de la température depuis une température dont la valeur correspond environ à la température pour une valeur de 50% de la volatilité de chaque huile essentielle ou de chaque parfum jusqu'à la température dont la valeur correspond environ à la température pour une valeur de 90% de la volatilité de chaque huile essentielle ou de chaque parfum, après quoi l'émulsion est maintenue pendant 1 à 2 heures à cette température.

2. Procédé suivant la revendication 1, caractérisé en ce que les huiles essentielles ou les parfums utilisés sont en particulier une huile essentielle naturelle et/ou des parfums de synthèse ou leurs mélanges.

3. Procédé suivant les revendications 1 et/ou 2, caractérisé en ce que les parfums microencapsulés sont purs ou dilués avec des solvants adéquats tels que phtalates, myristates, adipates, hydrocarbures non aromatiques supérieurs.

4. Procédé suivant les revendications 1 à 3, caractérisé en ce que pendant la préparation du mélange d'enduction ou de saturation en fonction du support utilisé, il est aussi ajouté un ou des parfums, liants, pigments et charges organiques et/ou inorganiques, agents anti-mousse et milieux régulant la viscosité microencapsulés appropriés.

5. Procédé suivant les revendications 1 à 4, caractérisé en ce que qu'après extraction, l'eau chargée des composants extraits est éliminée soit par gravité dans les séparateurs, soit par centrifugation.
